# FASCICULE DE BREVET EUROPEEN

(11) **EP 1 640 184 B1**
(45) Date de publication et mention de la délivrance du brevet: **14.05.2008**
(21) Numéro de dépôt: 05107812.9
(22) Date de dépôt: 25.08.2005
(51) Int. Cl.: B60C 7/16

(54) **Bandage flexible non pneumatique**
Flexibler, luftloser Fahrzeugreifen
Flexible non-pneumatic tire

(30) Priorité: 23.09.2004 FR 0410082
(43) Date de publication de la demande: 29.03.2006
(73) Titulaire: Michelin Recherche et Technique S.A., 1763 Granges-Paccot (CH)
(72) Inventeur: Laurent, Daniel, 1723, MARLY (CH)
(74) Mandataire: Lasson, Cédric Y. M.

(56) Documents cités:
- WO-A-00/37269

## Description

La présente invention concerne les bandages montés sur roues et conçus pour être capables de porter une charge substantielle sans pression de gonflage, appelés bandages non pneumatiques.

La demande de brevet WO 00/37269 propose un tel bandage élastique non pneumatique. Elle décrit une structure portante comportant essentiellement une pluralité d'éléments de support disposés sensiblement radialement, selon une symétrie cyclique tout autour de la circonférence du bandage. Lorsque le bandage décrit dans la demande de brevet WO 00/37269 porte une charge, un certain nombre d'éléments de support présents dans l'aire de contact sont soumis à une flexion importante, ce qui leur permet de développer un effort de reprise d'une partie de la charge. Une structure d'interconnexion fait travailler ensemble les éléments de support, en reportant les sollicitations sur les éléments de support adjacents. La capacité de ce bandage à porter une certaine charge provient donc de la sollicitation en flexion des éléments de support présents dans l'aire de contact du bandage élastique non pneumatique, et elle provient également de la sollicitation également en flexion, des éléments de support en dehors de l'aire de contact du bandage élastique non pneumatique, via la structure d'interconnexion.

La demande de brevet EP 1 359 028 propose un bandage de ce type dont la structure d'interconnexion est reliée aux éléments de support par des articulations élastiques.

La présente invention concerne en particulier la liaison des éléments de support avec le disque de roue.

Un objectif de l'invention est de proposer une liaison simple, précise, fiable et compatible avec une production et un assemblage industriels des bandages flexibles.

L'invention propose un bandage flexible ayant une structure portante flexible s'étendant circonférentiellement autour d'un axe de rotation, une bande de roulement à la périphérie radialement extérieure de la structure portante, et au moins une zone de fixation, radialement du côté de l'axe de rotation, pour l'immobilisation de ladite structure portante à un disque de roue, la structure portante comportant une pluralité d'éléments de support s'étendant essentiellement transversalement, dont une première partie est disposée au moins en regard d'une partie de la bande de roulement, et dont une autre partie est disposée au-delà de la bande de roulement, lesdits éléments de support étant juxtaposés circonférentiellement et répartis tout autour de la circonférence, chaque élément de support étant immobilisé sur le disque de roue par l'intermédiaire d'un cavalier, ledit cavalier chevauchant l'élément de support et étant destiné à coopérer avec des moyens de fixations du disque de roue.

L'invention concerne également un élément de support pour bandage flexible, ledit bandage comprenant une pluralité d'éléments de support juxtaposés circonférentiellement et répartis tout autour d'un axe de rotation du bandage pour former une structure portante, une bande de roulement à la périphérie radialement extérieure de la structure portante, un cavalier étant solidaire dudit élément de support et adapté pour coopérer avec des moyens de fixations du disque de roue.

De préférence, le cavalier est constitué d'une tôle métallique pliée de manière à épouser le profil de la zone de fixation dudit élément de support.

De préférence, l'élément de support comprend un empilement de lames flexibles et de couches d'une composition polymérique. De préférence encore les lames flexibles ont une forme ovoïde fermée. De préférence, le cavalier est rendu solidaire dudit élément de support par l'intermédiaire de ladite composition polymérique.

De préférence, le cavalier comporte deux jambes s'étendant radialement vers l'intérieur du bandage et un remplissage occupe le volume compris entre les jambes du cavalier sous la section de l'élément de support. De préférence, les jambes ont un profil en queue d'aronde.

L'invention concerne également un disque de roue apte à relier le bandage de l'invention à un moyeu, ledit disque comprenant des moyens de fixations aptes à coopérer avec une pluralité de cavaliers pour immobiliser une pluralité d'élément de support. De préférence, les moyens de fixations comprennent une surface d'appui cylindrique, un épaulement circonférentiel et un anneau de serrage aptes à coopérer pour former une rainure en queue d'aronde à la périphérie du disque.

L'invention concerne également une méthode d'obtention des éléments de support.

L'invention est décrite plus en détail au moyen des figures suivantes, sur lesquelles :
- la figure 1 est une perspective partielle du bandage non pneumatique ;
- la figure 2 est une coupe partielle d'une roue complète selon l'invention ;
- la figure 3 est une vue en perspective d'une coupe du disque de roue de l'invention ;
- la figure 4 est une vue plane de la zone de fixation selon l'invention ;
- la figure 5 est une vue en coupe selon le plan A-A de la figure 4 ;
- la figure 6 est un agrandissement de la partie centrale de la figure 2.

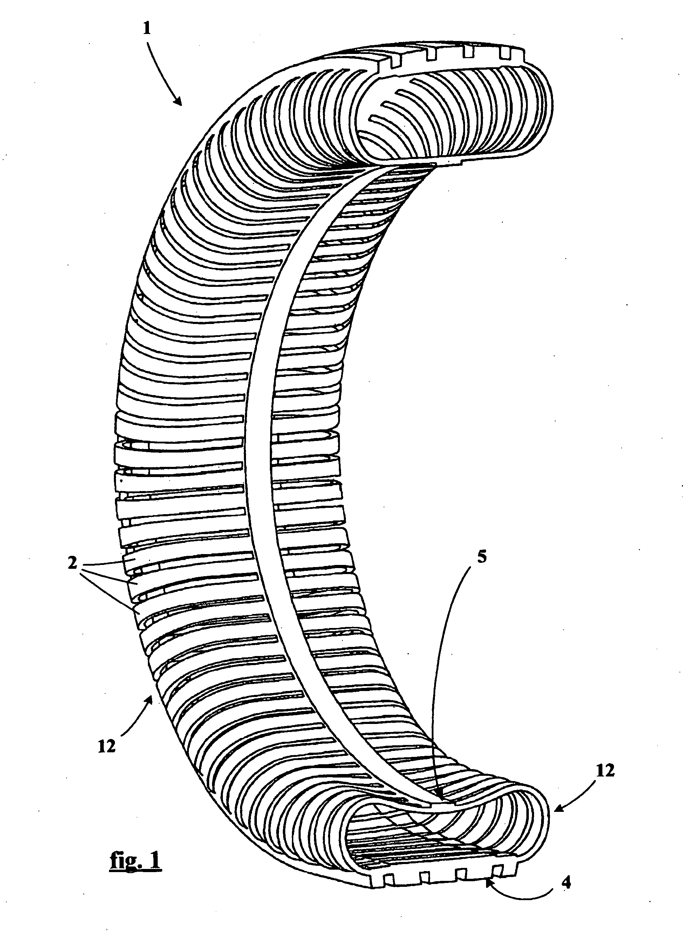

La figure 1 montre l'allure générale d'un bandage flexible 1 selon l'invention. Un tel bandage, lorsqu'il est associé à un disque de roue ou tout autre dispositif mécanique destiné à assurer la liaison entre le bandage flexible et le moyeu, remplace l'ensemble constitué par la pneumatique et la roue tels que nous les connaissons sur la plupart des véhicules de tourisme du marché actuel. Le profil du bandage délimite une cavité interne torique de section ovoïdale. Le bandage 1 comporte une zone de fixation 5, deux flancs 12 et une bande de roulement 4. Sur cette figure 1, la bande de roulement 4 comporte plusieurs nervures parallèles, mais cet aspect n'a bien entendu aucun caractère limitatif. Les flancs 12 sont arrondis et occupent la majeure partie de la hauteur radiale du bandage 1. La structure portante comporte une pluralité d'éléments de support 2. Les éléments de support 2 sont adjacents circonférentiellement et s'étendent chacun sensiblement radialement à partir de la zone de fixation 5. La figure 1 montre également le principe de ce type de bandage non pneumatique selon lequel c'est la flexion des éléments de support qui permet de porter la charge.

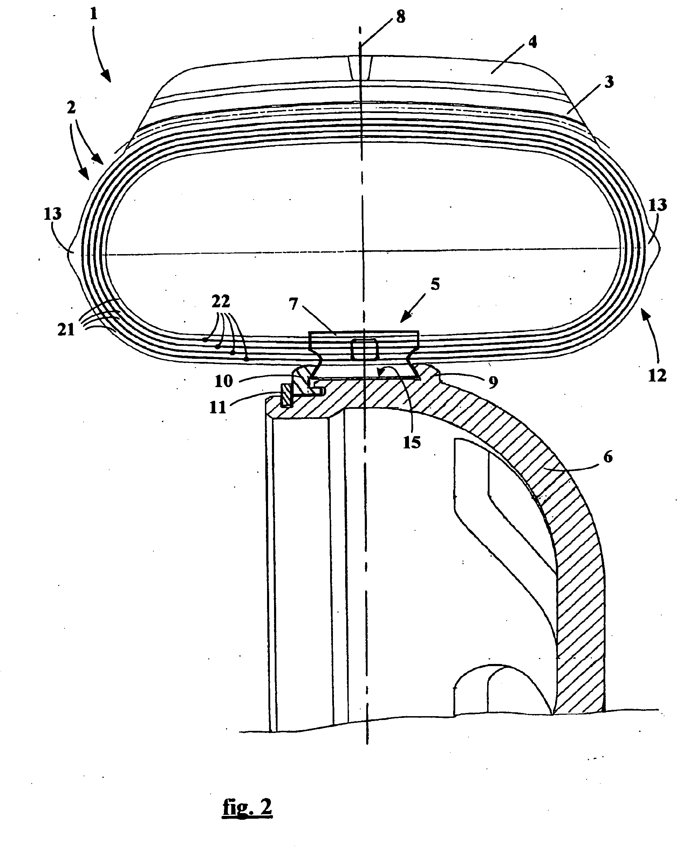

La figure 2 montre un mode de réalisation préféré. Les éléments de support 2 comportent un empilage de lames 21 en matière composite, flexibles, radialement superposées avec interposition entre les lames 21 d'une couche 22 de polymère ou d'une composition polymérique, notamment d'élastomère diénique ou de polyuréthanne. La liaison entre la matière composite et ledit polymère étant obtenue de manière connue, notamment lors de l'opération de cuisson, polymérisation ou réticulation finale de l'ensemble, si besoin à l'aide d'une composition adhésive adaptée à la nature du polymère, par exemple telle que décrite dans la demande WO 04/058909.

Une préparation mécanique (par exemple par ponçage) et/ou chimique (par exemple par l'emploi d'un agent acide) de la surface des lames peut être avantageuse pour améliorer la liaison entre les lames 21 et la couche 22.

Le faisceau de lames ainsi collées les unes sur les autres forme une poutre apte à être sollicitée principalement en flexion. De préférence, chaque lame flexible 21 s'étend tout autour de la section du bandage et n'est pas interrompue. L'empilement représenté ici comprend 5 lames. Cet aspect de la constitution du lamifié n'est cependant pas limitatif.

Pour d'autres détails sur la constitution de ces éléments de support et de la structure d'interconnexion, le lecteur pourra se reporter utilement aux demandes de brevet WO 00/037269 et EP 1 359 028 précitées.

Rappelons simplement que la matière composite des lames 21 comporte des fibres de renforcement noyées dans une résine. On utilise de préférence une matrice en résine thermodurcissable, mais dans certaines applications moins sollicitantes, une résine thermoplastique pourrait convenir. Les fibres sont de préférence disposées majoritairement longitudinalement dans chaque lame. On utilise par exemple des fibres de verre. Bien entendu, on pourrait utiliser de nombreuses autres fibres, comme par exemple des fibres de carbone. On pourrait aussi utiliser un hybride préparé avec des fibres de différentes natures.

On utilise la désignation « zone de fixation » pour désigner en général la partie du bandage destinée à coopérer avec une pièce mécanique rigide solidaire par ailleurs d'un moyeu. Convenons d'utiliser la désignation « disque de roue » pour ladite pièce mécanique rigide.

La figure 2 montre un mode de réalisation préféré de l'invention. Dans ce mode de réalisation, les éléments de support 2 sont fermés et comportent une zone de fixation 5 unique. La zone de fixation 5 est encastrée sur le disque de roue 6. Sur cet exemple, la zone de fixation est axialement centrée par rapport au bandage (voir la position du cavalier 7 par rapport au plan médian de la roue 8). Le bandage 1 comporte un grand nombre d'éléments de support comme illustré à la figure 1.

Les flancs 12 du bandage comporte des renflements de protection 13 constitués d'un polymère similaire à celui de la couche 22 interposée entre les lames flexibles 21. La bande de roulement 4 est liée à l'ensemble des éléments de support par l'intermédiaire d'une structure d'interconnexion 3.

Chaque élément de support 2 est lié au disque de roue 6 par l'intermédiaire d'un cavalier 7. Des moyens de fixation immobilisent le cavalier à la fois radialement, axialement et circonférentiellement vis-à-vis du disque. De préférence, les moyens de fixation comprennent une surface d'appui cylindrique 15 sur le disque, un épaulement circonférentiel incliné 9 solidaire du disque 6, un anneau de serrage 10 et un anneau élastique de blocage 11. Les cavaliers 7 (aussi nombreux que les éléments de support 2) viennent donc s'empiler le long de la circonférence du disque. De préférence, le nombre d'éléments de support (est donc le nombre de cavaliers) est tel que les cavaliers prennent appui circonférentiellement les uns sur les autres. On peut alternativement prévoir un certain écart entre les cavaliers, cet écart étant ou non comblé par des entretoises destinées à maintenir une pression circonférentielle sur les cavaliers.

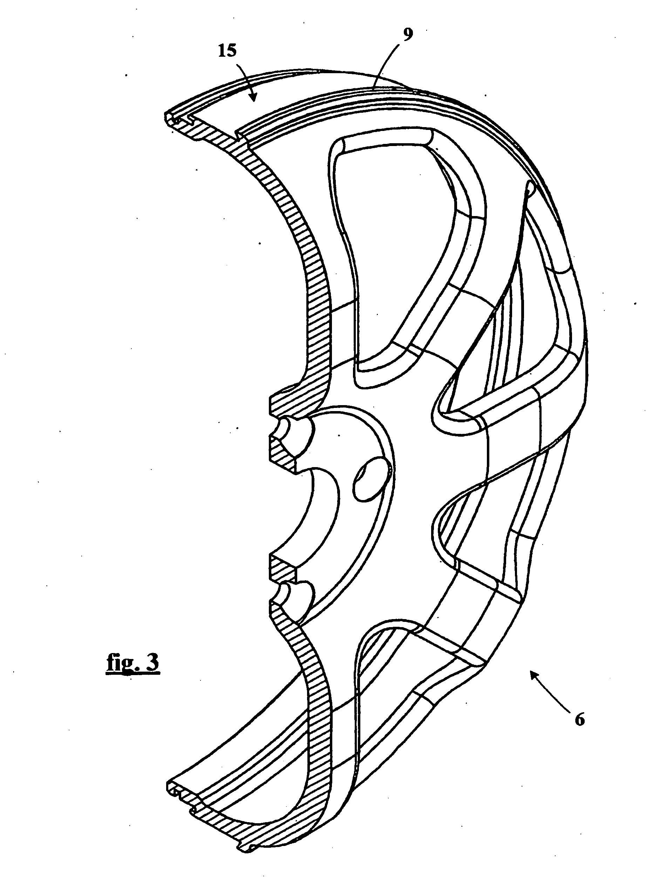

La figure 3 montre le disque de roue 6. Il a ici la forme générale d'une roue conventionnelle à l'exception de sa partie radialement extérieure destinée à recevoir le bandage selon l'invention, cette partie extérieure particulière remplaçant la jante d'une roue conventionnelle. Naturellement, ceci n'est qu'un exemple destiné à illustrer la fonction essentielle du disque de roue qui est d'assurer une liaison mécanique avec le moyeu. Ce disque de roue peut donc prendre toute forme adaptée, par exemple être monobloc comme sur cet exemple ou au contraire être assemblé à partir de plusieurs pièces.

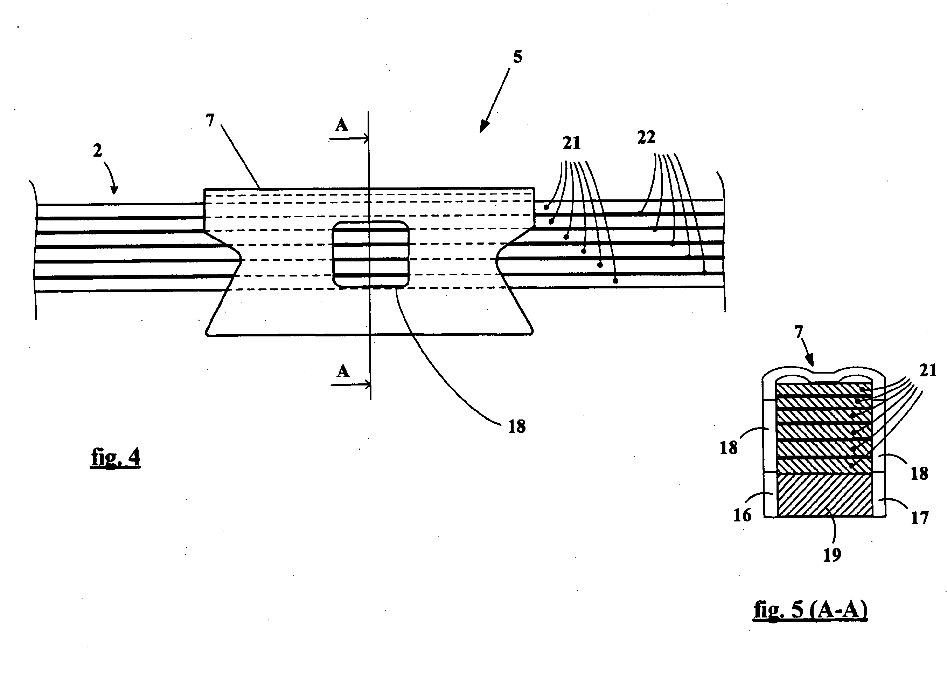

Les figures 4 et 5 montrent plus en détail un mode de réalisation du cavalier 7 de la figure 2 et de sa liaison à un élément de support. Ce cavalier est de préférence constitué d'une tôle métallique découpée et pliée afin d'épouser la section que présente l'élément de support dans la zone de fixation. De préférence, le cavalier est en tôle d'acier. Les deux jambes 16 et 17 du cavalier, qui dépassent de ladite section radialement vers l'intérieur du bandage 1, ont une forme permettant un encastrement efficace. Une forme en queue d'aronde comme représentée ici est un exemple de forme possible et connue en soi. Sur la coupe de la figure 5, on voit bien la superposition des lames flexibles 21 et des couches intermédiaires 22. On voit également qu'un remplissage 19 peut compléter le volume compris entre les jambes du cavalier et sous la section de l'élément de support. Ce remplissage peut de préférence être constitués du même polymère que les couches intermédiaires 22. Il peut également être en alliage léger. Une fonction du remplissage est de permettre la mise en compression circonférentielle des cavaliers dans les moyens de fixations. Le remplissage peut également avoir un volume légèrement différent de celui laissé entre les jambes du cavalier, par exemple légèrement supérieur pour augmenter ladite mise en compression ou pour éviter un contact direct entre le cavalier et le disque de roue. Le remplissage peut être rendu solidaire du cavalier, par collage ou tout autre procédé.

Alternativement, le cavalier et le remplissage peuvent être tous deux constitués du même matériau, par exemple un plastique (renforcé ou non). Dans ce cas, une possibilité intéressante consiste à surmouler le cavalier et le remplissage sur l'élément de support en une seule opération.

Des ouvertures 18 peuvent être pratiquées dans les jambes du cavalier. Ces ouvertures peuvent être utilisées pour introduire le polymère 22 entre les lames flexibles 21 (par injection, transfert, coulée ou autre).

Une méthode préférée pour la fabrication d'un élément de support et pour l'assemblage avec un cavalier comprend les étapes suivantes :
- préparer les lames flexibles 21,
- disposer ces lames flexibles dans un moule selon l'arrangement désiré dans l'élément de support,
- disposer un cavalier à cheval sur l'empilement des lames flexibles dans la position désirée par rapport à l'élément de support,
- introduire un polymère liquide susceptible à l'état solide de former les couches intermédiaires 22 et de solidariser le cavalier à l'empilement et le cas échéant de former le remplissage 19 et les renflements 13.
- Soumettre l'ensemble à une étape de solidification.

La solidification pourra être obtenue de manière connue, par exemple par cuisson, refroidissement, réticulation, polymérisation.

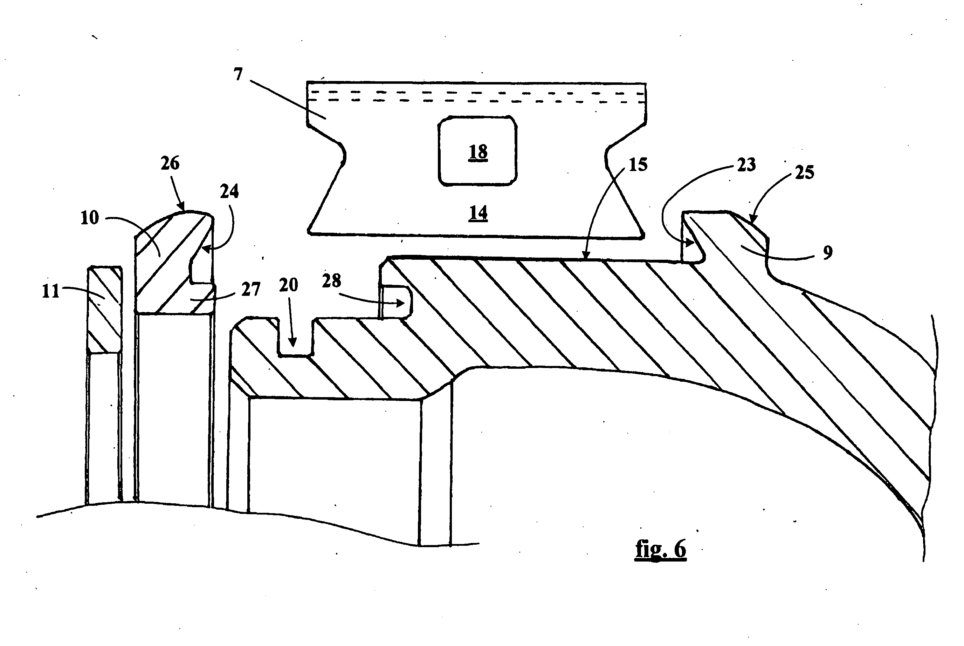

A la figure 6, on a représenté une coupe partielle du disque et des moyens de fixation ainsi qu'un cavalier pour illustrer plus en détail le mode de réalisation de la figure 2. On voit mieux sur cette vue que l'épaulement circonférentiel 9 forme en fait une surface d'appui conique 23. De même, l'anneau de serrage 10 comporte lui aussi une surface d'appui conique 24. Ces deux surfaces coniques 23 et 24 coopèrent avec la surface d'appui cylindrique 15 pour immobiliser l'ensemble des cavaliers 7 du bandage en formant une rainure en queue d'aronde à la périphérie du disque 6. De préférence, une projection axiale annulaire 27 de l'anneau de serrage coopère avec une gorge axiale annulaire 28 du disque 6 pour reprendre une partie au moins des efforts subis par l'anneau. Un moyen de blocage comme un anneau élastique 11 coopère avec une gorge 20 pour maintenir axialement l'anneau de serrage 10.

L'anneau de serrage 10 est de préférence monobloc et fermé bien qu'il puisse également être constitué d'une pluralité d'arcs, des espaces étant laissés ou non entre les arcs. De même, l'épaulement 9 peut être taillé dans le disque ou rapporté sur le disque, il peut être continu ou discontinu. De préférence, l'épaulement 9 est continu (voir figure 3) et monobloc avec le disque comme visible ici.

De préférence, les surfaces radialement extérieures 25 et 26 de l'épaulement 9 et de l'anneau 10 constituent des surfaces d'appui pour les éléments de support. Cette fonction est illustrée à la figure 2. On peut se reporter à la description de la demande de brevet WO 00/037269 et en particulier à ses figures 7 à 9 pour ce qui concerne les possibilités de variations dimensionnelles de ces surfaces d'appui.

Rappelons que la partie radialement intérieure de la structure portante, c'est à dire la partie la plus proche de l'axe de rotation de la roue, a une contribution importante à la flèche sous charge, donc au confort procuré par le bandage. Dès lors, il convient que la zone de fixation soit localisée de préférence sur une fraction correspondant à au plus 50% de la distance séparant axialement les limites latérales du bandage. Ladite partie radialement intérieure de la structure portante flexible est ainsi en porte-à-faux assez prononcé au-delà de la zone de fixation. Une disposition constructive favorable est que les éléments de support soient, juste au-delà de la zone de fixation, orientés selon une direction sensiblement parallèle à l'axe de rotation. C'est ce qui apparaît dans l'exemple décrit. Notons enfin que, le bandage décrit étant symétrique, la zone de fixation est sensiblement centrée entre les limites axiales dudit bandage, sans que ceci ne soit limitatif. On pourrait bien entendu adopter une architecture dissymétrique, notamment dans la localisation de la zone de fixation.

Selon une variante de l'invention, les éléments de support peuvent également être ouverts, c'est à dire interrompus par exemple comme représenté aux figures 8 et 9 de la demande de brevet WO 00/037269 et à la figure 1 de la demande de brevet EP 1 359 028. Dans ce cas, la fermeture est assurée par le cavalier et les moyens de fixations décrits plus hauts ainsi que, le cas échéant, par le polymère de liaison du cavalier.

## Revendications

1. Elément de support (2) pour bandage flexible (1), ledit bandage comprenant une pluralité d'éléments de support juxtaposés circonférentiellement et répartis tout autour d'un axe de rotation du bandage pour former une structure portante, une bande de roulement (4) à la périphérie radialement extérieure de la structure portante, **caractérisé en ce qu**'un cavalier (7) est solidaire dudit élément de support et le chevauche, ledit cavalier étant adapté pour coopérer avec des moyens de fixations d'un disque de roue.

2. Elément de support (2) selon la revendication 1 dans lequel le cavalier (7) est constitué d'une tôle métallique pliée de manière à épouser le profil de la zone de fixation dudit élément de support.

3. Elément de support selon l'une des revendications précédentes, comprenant un empilement de lames flexibles (21) et de couches (22) d'une composition polymérique.

4. Elément de support selon la revendication 3 dans lequel les lames flexibles ont une forme ovoïde fermée.

5. Elément de support selon l'une des revendications 3 ou 4 dans lequel le cavalier (7) est rendu solidaire dudit élément de support par l'intermédiaire de ladite composition polymérique.

6. Elément de support selon l'une des revendications précédentes dans lequel le cavalier (7) comporte deux jambes (16, 17) s'étendant radialement vers l'intérieur du bandage, un remplissage (19) occupant le volume compris entre les jambes du cavalier sous la section de l'élément de support.

7. Elément de support selon l'une des revendications précédentes dans lequel le cavalier (7) comporte deux jambes (16, 17) s'étendant radialement vers l'intérieur du bandage, les jambes ayant un profil en queue d'aronde.

8. Bandage flexible (1) comprenant une pluralité d'élément de support selon l'une des revendications précédentes.

9. Bandage flexible (1) ayant une structure portante flexible s'étendant circonférentiellement autour d'un axe de rotation, une bande de roulement (4) à la périphérie radialement extérieure de la structure portante, et au moins une zone de fixation (5), radialement du côté de l'axe de rotation, pour l'immobilisation de ladite structure portante à un disque de roue (6), la structure portante comportant une pluralité d'éléments de support s'étendant essentiellement transversalement, dont une première partie est disposée au moins en regard d'une partie de la bande de roulement, et dont une autre partie est disposée au-delà de la bande de roulement, lesdits éléments de support étant juxtaposés circonférentiellement et répartis tout autour de la circonférence, **caractérisé en ce que** chaque élément de support est immobilisé sur le disque de roue par l'intermédiaire d'un cavalier (7), ledit cavalier chevauchant l'élément de support et étant destiné à coopérer avec des moyens de fixations (9, 10, 11) du disque de roue.

10. Disque de roue (6) apte à relier le bandage (1) selon l'une des revendications 8 ou 9 à un moyeu, ledit disque comprenant des moyens de fixations (9, 10, 11) aptes à coopérer avec une pluralité de cavaliers pour immobiliser une pluralité d'élément de support.

11. Disque de roue (6) selon la revendication 10 dans lequel les moyens de fixations comprennent une surface d'appui cylindrique (15), un épaulement circonférentiel (9) et un anneau de serrage (10) aptes à coopérer pour former une rainure en queue d'aronde à la périphérie du disque.

## Claims

1. Support element (2) for a flexible tyre (1), the said tyre comprising a plurality of support elements adjacent to each other circumferentially and distributed all around a rotation axis of the tyre to form a load bearing structure, a tread (4) at the radially outside periphery of the load bearing structure, **characterised in that** a staple (7) is fixed to the said support element and straddles it, said staple being adapted to cooperate with wheel disk attachment means.

2. Support element (2) according to claim 1, in which the staple (7) consists of a metal plate folded to match the shape of the attachment zone of the said support element.

3. Support element according to one of the previous claims, comprising a stack of flexible strips (21) and layers (22) made of polymer composition.

4. Support element according to claim 3 in which the flexible strips have a closed ovoid shape.

5. Support element according to either claim 3 or 4 in which the staple (7) is fixed rigidly to the said support element through the said polymer composition.

6. Support element according to one of the previous claims in which the staple (7) comprises two arms (16, 17) extending radially inwards, a filling (19) occupying the volume between the arms of the staple under the section of the support element.

7. Support element according to one of the previous claims, in which the staple (7) comprises two arms (16, 17) extending radially inwards, the arms having a dovetail shape.

8. Flexible tyre (1) comprising a plurality of support elements according to one of the previous claims.

9. Flexible tyre (1) with a flexible load bearing structure extending circumferentially around a rotation axis, a tread (4) at the periphery radially outside the load bearing structure, and at least one attachment zone (5) radially on the side of the rotation axis, to fix the said load bearing structure to a wheel disk (6), the load bearing structure comprising a plurality of support elements extending essentially in the transverse direction, in which at least a first part is arranged facing a part of the tread, and another part of which is arranged beyond the tread, the said support elements being adjacent to each other around the circumferential direction and distributed all around the circumference, **characterised in that** each support element is fixed on the wheel disk by a staple (7), the said staple straddling the support element and being designed to cooperate with wheel disk attachment means (9, 10, 11).

10. Wheel disk (6) capable of connecting to a hub the tyre (1) according to either claim 8 or 9, the said disk comprising attachment means (9, 10, 11) capable of cooperating with a plurality of staples to fix a plurality of support elements.

11. Wheel disk (6) according to claim 10, in which the attachment means include a cylindrical bearing surface (15), a circumferential shoulder (9) and a tightening ring (10) capable of cooperating to form a dovetail-shaped groove around the periphery of the disk.

## Patentansprüche

1. Stützelement (2) für einen geschmeidigen Radreifen (1), wobei der Radreifen mehrere Stützelemente, die in Umfangsrichtung nebeneinander angeordnet und um eine Drehachse des Radreifens verteilt sind, um eine Tragkonstruktion zu bilden, und eine Lauffläche (4) am radial äußeren Umfang der Tragkonstruktion aufweist, **dadurch gekennzeichnet, dass** eine Krampe (7) fest mit dem Stützelement verbunden ist und es überlappt, wobei die Krampe geeignet ist, um mit Befestigungsmitteln einer Radscheibe zusammenzuwirken.

2. Stützelement (2) nach Anspruch 1, bei dem die Krampe (7) aus einem Metallblech besteht, das so umgebogen wird, dass es sich an das Profil der Befestigungszone des Stützelements anpasst.

3. Stützelement nach einem der vorhergehenden Ansprüche, das einen Stapel von geschmeidigen Lamellen (21) und von Schichten (22) einer Polymerzusammensetzung aufweist.

4. Stützelement nach Anspruch 3, bei dem die geschmeidigen Lamellen eine geschlossene ovale Form haben.

5. Stützelement nach einem der Ansprüche 3 oder 4, bei dem die Krampe (7) mittels der Polymerzusammensetzung fest mit dem Stützelement verbunden wird.

6. Stützelement nach einem der vorhergehenden Ansprüche, bei dem die Krampe (7) zwei Schenkel (16, 17) aufweist, die sich radial zum Inneren des Radreifens erstrecken, wobei eine Füllung (19) den Raum einnimmt, der zwischen den Schenkeln der Krampe unter dem Querschnitt des Stützelements liegt.

7. Stützelement nach einem der vorhergehenden Ansprüche, bei dem die Krampe (7) zwei Schenkel (16, 17) aufweist, die sich radial zum Inneren des Radreifens erstrecken, wobei die Schenkel ein Schwalbenschwanzprofil haben.

8. Geschmeidiger Radreifen (1), der mehrere Stützelemente nach einem der vorhergehenden Ansprüche aufweist.

9. Geschmeidiger Radreifen (1) mit einer geschmeidigen Tragkonstruktion, die sich in Umfangsrichtung um eine Drehachse erstreckt, mit einer Lauffläche (4) am radial äußeren Umfang der Tragkonstruktion und mit mindestens einer Befestigungszone (5) radial auf der Seite der Drehachse zur Fixierung der Tragkonstruktion an einer Radscheibe (6), wobei die Tragkonstruktion mehrere Stützelemente aufweist, die sich im Wesentlichen quer erstrecken, von denen ein erster Teil zumindest gegenüber einem Teil der Lauffläche angeordnet ist und von denen ein anderer Teil jenseits der Lauffläche angeordnet ist, wobei die Stützelemente in Umfangsrichtung nebeneinander angeordnet und um den ganzen Umfang verteilt sind, **dadurch gekennzeichnet, dass** jedes Stützelement auf der Radscheibe mittels einer Krampe (7) fixiert wird, wobei die Krampe das Stützelement überlappt und dazu bestimmt ist, mit Befestigungsmitteln (9, 10, 11) der Radscheibe zusammenzuwirken.

10. Radscheibe (6), die geeignet ist, um den Radreifen (1) nach einem der Ansprüche 8 oder 9 mit einer Nabe zu verbinden, wobei die Scheibe Befestigungsmittel (9, 10, 11) aufweist, die mit mehreren Krampen zusammenwirken können, um mehrere Stützelemente zu fixieren.

11. Radscheibe (6) nach Anspruch 10, bei der die Befestigungsmittel eine zylindrische Auflagefläche (15), eine Umfangsschulter (9) und einen Klemmring (10) aufweisen, die zusammenwirken können, um eine schwalbenschwanzförmige Rille am Umfang der Scheibe zu formen.
